# EUROPÄISCHE PATENTSCHRIFT

(11) **EP 4 147 109 B1**
(45) Veröffentlichungstag und Bekanntmachung des Hinweises auf die Patenterteilung: **11.12.2024**
(21) Anmeldenummer: 21720995.6
(22) Anmeldetag: 19.04.2021
(51) Int. Cl.: G05D 1/242, G05D 1/622, G05D 1/65, G05D 105/28, G05D 107/70, G05D 109/10, G05D 111/10

(54) **MOBILES SYSTEM UND VERFAHREN ZUM BETREIBEN EINES MOBILEN SYSTEMS**
MOBILE SYSTEM AND METHOD FOR OPERATING A MOBILE SYSTEM
SYSTÈME MOBILE ET PROCÉDÉ DE FONCTIONNEMENT D'UN SYSTÈME MOBILE

(30) Priorität: 05.05.2020 DE 102020002675
(43) Veröffentlichungstag der Anmeldung: 15.03.2023
(73) Patentinhaber: SEW-EURODRIVE GmbH & Co. KG, 76646 Bruchsal (DE)
(72) Erfinder: RAUSCHELBACH, Maximilian, 76137 Karlsruhe (DE); HOLZWEISSIG, Peter, 68782 Brühl (DE); STAMMER, Thorsten, 69234 Dielheim (DE); DEUTSCHER, Reiner, 76149 Karlsruhe (DE)
(86) Internationale Anmeldenummer: PCT/EP2021/025144
(87) Internationale Veröffentlichungsnummer: WO 2021/223906

(56) Entgegenhaltungen:
- WO-A1-2017/050358
- US-A1- 2006 058 921
- US-A1- 2019 161 274

## Beschreibung

Die Erfindung betrifft ein mobiles System zum Betrieb insbesondere in einer technischen Anlage, welches mindestens einen Sensor zur Erkennung von Hindernissen sowie zur Erkennung von Konturen von Objekten und eine Sicherheitssteuerung, welche dazu eingerichtet ist, eine Warnmeldung zu generieren, wenn der mindestens eine Sensor ein Hindernis in einem definierten Schutzfeld erkennt, umfasst. Die Erfindung betrifft auch ein Verfahren zum Betreiben eines erfindungsgemäßen mobilen Systems, insbesondere in einer technischen Anlage.

Bei der technischen Anlage handelt es sich insbesondere um eine industrielle Anwendung, beispielsweise ein Produktionswerk, eine Industriehalle oder ein Logistikzentrum. Bei dem mobilen System der technischen Anlage handelt es sich beispielsweise um ein autonom fahrendes Fahrzeug. Das mobile System dient beispielsweise zum Transport von Gegenständen innerhalb der technischen Anlage. In der technischen Anlage befinden sich auch weitere Objekte. Das mobile System weist einen Sensor zur Erfassung solcher Objekte und Entfernungen zu solchen Objekten auf.

Aus dem Dokument DE 10 2019 001 253 A1 ist ein Verfahren zum Betreiben einer technischen Anlage bekannt, welche mindestens ein mobiles System aufweist, das auf einer Verkehrsfläche der technischen Anlage verfahrbar ist. Das mobile System erfasst mit Hilfe von entsprechenden Sensoren Objekte in der technischen Anlage. Die Positionen der so erfassten Objekte werden dabei mit vermuteten Positionen von Objekten gemäß einer Karte der technischen Anlage verglichen.

Aus der DE 10 2015 220 495 ist ein Verfahren zum Betreiben eines Manipulatorsystems bekannt, welches ein fahrerloses Transportsystem aufweist. Dabei wird ein Schutzfeld des Manipulatorsystems überwacht, und das Schutzfeld wird basierend auf Umgebungsinformationen angepasst.

Aus der DE 10 2015 220 493 ist ein Verfahren zum Betreiben eines Manipulatorsystems bekannt, welches ein fahrerloses Transportsystem aufweist. Dabei werden, basierend auf Umgebungsinformationen, verschiedene Schutzfelder gebildet.

Aus der WO 2017/050358 A1 ist ein Verfahren zur sicheren Navigation eines mobilen Roboters bekannt. Die Geschwindigkeit des mobilen Roboters ist in Abhängigkeit von erkannten Hindernissen änderbar.

Aus der US 2019/0161274 A1 ist ein autonomer mobiler Roboter bekannt, welcher einen Navigationsrechner und Sensoren zur Erkennung von Hindernissen aufweist. Bei Erkennung eines Hindernisses stellt der Navigationsrechner einen Antrieb des autonomen mobilen Roboters ab.

Aus der US 2006/0058921 A1 ist ein mobiler Roboter bekannt, welcher eine Vorrichtung zur Erkennung von Hindernissen aufweist. Der mobile Roboter weist ferner eine Recheneinheit zur Berechnung einer zu fahrenden Route auf.

Der Erfindung liegt die Aufgabe zugrunde, ein mobiles System sowie ein Verfahren zum Betreiben eines mobilen Systems, insbesondere in einer technischen Anlage, weiterzubilden. Die Aufgabe wird durch ein mobiles System mit den in Anspruch 1 angegebenen Merkmalen gelöst. Vorteilhafte Ausgestaltungen und Weiterbildungen sind Gegenstand der Unteransprüche. Die Aufgabe wird auch durch ein Verfahren zum Betreiben eines mobilen Systems mit den in Anspruch 7 angegebenen Merkmalen gelöst. Vorteilhafte Ausgestaltungen und Weiterbildungen sind Gegenstand der Unteransprüche.

Ein erfindungsgemäßes mobiles System zum Betrieb insbesondere in einer technischen Anlage umfasst mindestens einen Sensor zur Erkennung von Hindernissen sowie zur Erkennung von Konturen von Objekten und eine Sicherheitssteuerung, welche dazu eingerichtet ist, eine Warnmeldung zu generieren, wenn der mindestens eine Sensor des mobilen Systems ein Hindernis in einem definierten Schutzfeld erkennt.

Das mobile System ist dabei in einem Standardmodus mit einem Standardschutzfeld, welches eine Standardbreite in einer Querrichtung aufweist, betreibbar, und das mobile System ist in einem Sondermodus mit einem Sonderschutzfeld, welches eine Sonderbreite in der Querrichtung aufweist, betreibbar, wobei die Sonderbreite kleiner ist als die Standardbreite. Das mobile System umfasst eine Prädiktionseinheit zur Prädiktion einer vorgegebenen Kontur eines Objekts und eine Vergleichseinheit zum Vergleich einer von der Prädiktionseinheit prädizierten Kontur mit einer von dem mindestens einen Sensor erkannten Kontur. Eine Umschaltung von dem Standardmodus zu dem Sondermodus ist vorgesehen, wenn die Vergleichseinheit eine Übereinstimmung einer von der Prädiktionseinheit prädizierten Kontur mit einer von dem mindestens einen Sensor, insbesondere innerhalb des Standardschutzfeldes, erkannten Kontur feststellt.

Ein Hindernis ist beispielsweise ein anderes mobiles System, eine Person oder ein sonstiges Objekt, welches nicht von der Prädiktionseinheit prädiziert wird. Bei Erkennung eines Hindernisses erfolgt in der Regel keine Umschaltung zu dem Sondermodus. Es ist denkbar, dass die Sicherheitssteuerung neben dem Generieren der Warnmeldung weitere Aktionen durchführt, beispielsweise das mobile System abbremst und eine Weiterfahrt verhindert. Eine Kontur ist beispielsweise eine Kante.

Durch die erfindungsgemäße Ausgestaltung des mobilen Systems ist eine sicherheitsgerichtete Reduktion der Schutzfeldabmessungen beim Einfahren und Ausfahren in enge Räume, beispielsweise in Übergabestationen, sowie beim Befahren von schmalen Gängen oder Tordurchfahrten möglich. Ein gegebener Sicherheitsabstand zu anderen Objekten von beispielsweise 500 mm, der durch das Standardschutzfeld gegeben ist, kann vorübergehend im Sondermodus mit dem schmäleren Sonderschutzfeld unterschritten werden.

Erfindungsgemäß ist eine Umschaltung von dem Sondermodus zu dem Standardmodus vorgesehen, wenn die vorgegebene Kontur des Objekts von dem mindestens einen Sensor nicht mehr erkannt wird. Beispielsweise ist eine Umschaltung wieder in den Standardmodus vorgesehen, wenn das mobile System das Ende eines Tunnels erreicht hat und die Tunnelwand nicht mehr erkannt wird.

Erfindungsgemäß ist das mobile System in dem Sondermodus mit einer definierten Sondergeschwindigkeit betreibbar, und das mobile System ist nach der Umschaltung von dem Sondermodus zu dem Standardmodus kurzzeitig mit einer Geschwindigkeit betreibbar, welche geringer als die Sondergeschwindigkeit ist. Dies ist beispielsweise der Fall, wenn das mobile System das Ende eines Tunnels erreicht hat, da seitlich hinter dem Tunnel sich Personen befinden können, die von der Tunnelwand verdeckt sind und daher von dem mindestens einen Sensor nicht erkannt werden.

Erfindungsgemäß wird das mobile System in dem Sondermodus mit der definierten Sondergeschwindigkeit betrieben, und das mobile System wird nach der Umschaltung von dem Sondermodus zu dem Standardmodus kurzzeitig mit einer Geschwindigkeit betrieben, welche geringer als die Sondergeschwindigkeit ist, und das mobile System wird vor der Umschaltung von dem Standardmodus zu dem Sondermodus mit einer Geschwindigkeit betrieben, welche höher als die Sondergeschwindigkeit ist.

Vorzugsweise verläuft die Querrichtung, in welcher die Breite der Schutzfelder gemessen wird, dabei rechtwinklig zu einer Fahrtrichtung des mobilen Systems. Die besagten Schutzfelder erstrecken sich auch in die Fahrtrichtung und sind somit zumindest annähernd rechteckförmig ausgebildet. Je nach der erkannten Kontur ist das Sonderschutzfeld in Querrichtung einseitig oder beidseitig im Vergleich zu dem Standardschutzfeld reduziert.

Gemäß einer bevorzugten Ausgestaltung der Erfindung weist das mobile System einen ersten Sensor und einen zweiten Sensor auf. Dabei sind der erste Sensor und der zweite Sensor an gegenüberliegenden Seiten des mobilen Systems angeordnet. Beispielsweise ist der erste Sensor in Bezug auf eine Fahrtrichtung des mobilen Systems an einer Frontseite angeordnet, und der zweite Sensor ist an einer Rückseite angeordnet. Wenn das mobile System einen rechteckförmigen Querschnitt aufweist sind die Sensoren beispielsweise auch an gegenüberliegenden Ecken des rechteckförmigen Querschnitts anordenbar. Durch zwei derartig angeordnete Sensoren sind Konturen von Objekten sowie Hindernisse in mehreren Schutzfeldern, beispielsweise in Fahrtrichtung vor und hinter dem mobilen System, erkennbar.

Gemäß einer vorteilhaften Ausgestaltung der Erfindung ist der mindestens eine Sensor als Laserscanner ausgebildet. Ein Laserscanner sendet einen Laserstrahl aus, detektiert einen reflektierten Laserstrahl und berechnet daraus eine Entfernung zu einem Objekt, das den Laserstrahl reflektiert. Ein Laserscanner dient dem mobilen System insbesondere dazu, Hindernisse sowie Konturen von Objekten in der technischen Anlage zu erkennen und eine Entfernung zu einem erkannten Objekt zu erfassen. Ein Laserscanner ist in bekannten mobilen Systemen bereits vorhanden, es fallen somit keine zusätzlichen Kosten für die Installation des mindestens einen Sensors an.

Gemäß einer bevorzugten Ausgestaltung der Erfindung ist das mobile System als autonom fahrendes Fahrzeug ausgebildet, welches eine Antriebseinrichtung, einen elektrischen Energiespeicher zur Versorgung der Antriebseinrichtung sowie eine Steuereinheit zur Steuerung der Antriebseinrichtung aufweist. Die Antriebseinrichtung umfasst beispielsweise einen Elektromotor, ein Getriebe und Antriebsräder. Bei dem mobilen System handelt es sich insbesondere um ein fahrerloses Transportsystem zum Transport von Gegenständen innerhalb der technischen Anlage.

Gemäß einer bevorzugten Weiterbildung der Erfindung weist die Prädiktionseinheit eine Karte auf, welche Objekte enthält, welche entlang eines vorgegebenen Fahrwegs des mobilen Systems angeordnet sind. Die Prädiktionseinheit ist somit in der Lage, Objekte zu prädizieren, welche auf der Karte der Prädiktionseinheit entlang eines vorgegebenen Fahrwegs des mobilen Systems angeordnet sind.

Gemäß einer vorteilhaften Weiterbildung der Erfindung umfasst das mobile System einen Positionssensor zur Erfassung einer Position des mobilen Systems insbesondere innerhalb der technischen Anlage. Bei dem besagten Sensor handelt es sich beispielsweis um einen GPS-Empfänger. Die Erfassung der eigenen Position des mobilen Systems, insbesondere in der technischen Anlage, ermöglicht der Prädiktionseinheit, anhand einer Karte dasjenige relevante Objekt zu prädizieren, welches entlang eines vorgegebenen Fahrwegs des mobilen Systems liegt und von der eigenen Position aus gesehen als nächstes erreicht wird.

Das erfindungsgemäße Verfahren zum Betreiben eines erfindungsgemäßen mobilen Systems, insbesondere in einer technischen Anlage, ist dadurch gekennzeichnet, dass von der Prädiktionseinheit eine vorgegebene Kontur eines Objekts prädiziert wird, und von der Vergleichseinheit ein Vergleich der von der Prädiktionseinheit prädizierten Kontur mit einer von dem mindestens einen Sensor, insbesondere innerhalb des Standardschutzfeldes, erkannten Kontur durchgeführt wird, und dass eine Umschaltung von dem Standardmodus zu dem Sondermodus durchgeführt wird, wenn von der Vergleichseinheit eine Übereinstimmung einer von der Prädiktionseinheit prädizierten Kontur mit einer von dem mindestens einen Sensor, insbesondere innerhalb des Standardschutzfeldes, erkannten Kontur festgestellt wird.

Das erfindungsgemäße Verfahren gestattet eine sicherheitsgerichtete Reduktion der Schutzfeldabmessungen beim Einfahren und Ausfahren in enge Räume, beispielsweise in Übergabestationen, sowie beim Befahren von schmalen Gängen oder Tordurchfahrten. Ein gegebener Sicherheitsabstand zu anderen Objekten von beispielsweise 500 mm, der durch das Standardschutzfeld gegeben ist, kann vorübergehend im Sondermodus mit dem schmäleren Sonderschutzfeld unterschritten werden.

Erfindungsgemäß wird eine Umschaltung von dem Sondermodus zu dem Standardmodus durchgeführt, wenn die vorgegebene Kontur des Objekts von dem mindestens einen Sensor nicht mehr erkannt wird. Beispielsweise wird wieder in den Standardmodus umgeschaltet, wenn das mobile System das Ende eines Tunnels erreicht hat und die Tunnelwand nicht mehr erkannt wird.

Erfindungsgemäß wird das mobile System im Sondermodus mit einer definierten Sondergeschwindigkeit betrieben, und nach der Umschaltung von dem Sondermodus zu dem Standardmodus wird das mobile System kurzzeitig mit einer Geschwindigkeit betrieben, welche geringer als die Sondergeschwindigkeit ist. Dies ist beispielsweise der Fall, wenn das mobile System das Ende eines Tunnels erreicht hat, da seitlich hinter dem Tunnel sich Personen befinden können, die von der Tunnelwand verdeckt sind und daher von dem mindestens einen Sensor nicht erkannt werden.

Erfindungsgemäß wird das mobile System vor der Umschaltung von dem Standardmodus zu dem Sondermodus mit einer Geschwindigkeit betrieben, welche höher als die Sondergeschwindigkeit ist. Das mobile System wird also im Sondermodus mit verkleinertem Schutzfeld aus Sicherheitsgründen mit verringerter Geschwindigkeit betrieben.

Gemäß einer bevorzugten Weiterbildung der Erfindung wird von der Prädiktionseinheit die Kontur eines Objekts prädiziert, welches auf einer Karte der Prädiktionseinheit entlang eines vorgegebenen Fahrwegs des mobilen Systems angeordnet ist. Somit sind alle Objekte entlang des Fahrwegs, die eine Verkleinerung des Schutzfeldes erfordern mittels der besagten Karte prädizierbar.

Vorzugsweise wird die Umschaltung von dem Standardmodus zu dem Sondermodus nur dann durchgeführt, wenn von der Vergleichseinheit eine Übereinstimmung der von der Prädiktionseinheit prädizierten Kontur mit der von dem mindestens einen Sensor innerhalb des Standardschutzfeldes erkannten Kontur in einer definierten Zeitspanne festgestellt wird.

Vorzugsweise wird die Umschaltung von dem Standardmodus zu dem Sondermodus nur dann durchgeführt, wenn von der Vergleichseinheit eine Übereinstimmung der von der Prädiktionseinheit prädizierten Kontur mit der von dem mindestens einen Sensor innerhalb des Standardschutzfeldes erkannten Kontur während eines definierten Fahrwegs des mobilen Systems festgestellt wird.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine schematische Darstellung eines mobilen Systems vor der Einfahrt in eine Übergabestation,
- Figur 2:: das mobile System aus Figur 1 bei der Erkennung von Konturen der Übergabestation,
- Figur 3:: das mobile System aus Figur 2 im Sondermodus vor der Übergabestation,
- Figur 4:: das mobile System aus Figur 1 bei der Erkennung einer Kontur einer Wand,
- Figur 5:: das mobile System aus Figur 4 im Sondermodus vor der Wand,
- Figur 6:: das mobile System aus Figur 4 im Sondermodus neben der Wand und
- Figur 7:: das mobile System aus Figur 4 im Sondermodus am Ende der Wand.

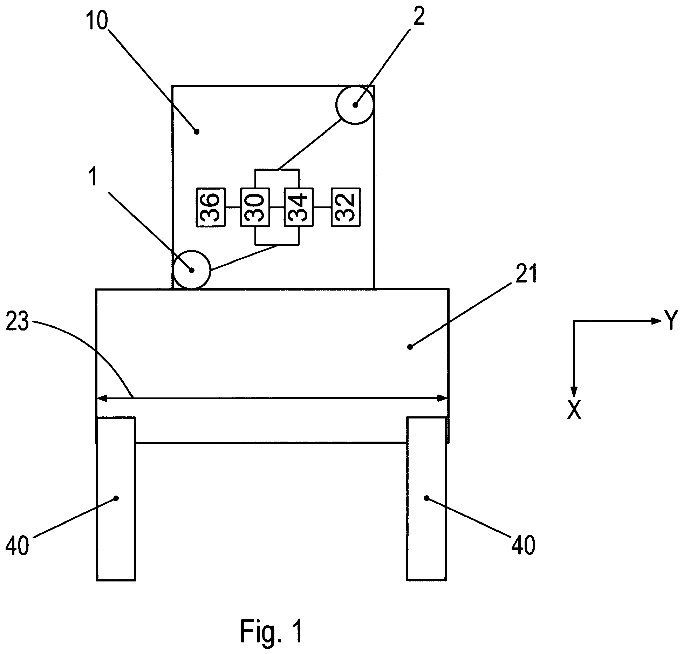

Figur 1 zeigt eine schematische Darstellung eines mobilen Systems 10 vor der Einfahrt in eine Übergabestation. Das mobile System 10 ist als autonom fahrendes Fahrzeug ausgebildet und ist insbesondere dazu eingerichtet, Bauteile zur Herstellung eines Produkts sowie ein teilweise gefertigtes Produkt oder ein vollständig gefertigtes Produkt zu transportieren. Das mobile System 10 bewegt sich vorliegend in eine Fahrtrichtung X auf die Übergabestation zu.

Das mobile System 10 umfasst eine Antriebseinrichtung zum Antrieb des mobilen Systems 10, welche einen Elektromotor, ein Getriebe und Antriebsräder aufweist. Das mobile System 10 umfasst ferner einen elektrischen Energiespeicher zur Versorgung der Antriebseinrichtung mit elektrischer Energie. Das mobile System 10 umfasst auch eine Steuereinheit 36 zur Steuerung der Antriebseinrichtung.

Das mobile System 10 umfasst einen ersten Sensor 1 und einen zweiten Sensor 2 zur Erkennung von Hindernissen sowie zur Erkennung von Konturen von Objekten 40. Die Sensoren 1, 2 sind jeweils als Laserscanner ausgebildet. Das mobile System 10 weist einen rechteckförmigen Querschnitt auf. Die Sensoren 1, 2 sind dabei an gegenüberliegenden Ecken des rechteckförmigen Querschnitts angeordnet. Der erste Sensor 1 ist in Bezug auf die Fahrtrichtung X an einer Frontseite angeordnet, und der zweite Sensor 2 ist an einer Rückseite angeordnet. Der erste Sensor 1 und der zweite Sensor 2 sind somit an gegenüberliegenden Seiten des mobilen Systems 10 angeordnet.

Das mobile System 10 wird in der hier gezeigten Darstellung in einem Standardmodus mit einem Standardschutzfeld 21 betrieben. Das Standardschutzfeld 21 ist rechteckförmig ausgebildet und erstreckt sich in die Fahrtrichtung X und in eine Querrichtung Y, die rechtwinklig zu der Fahrtrichtung X des mobilen Systems 10 verläuft. Das Standardschutzfeld 21 weist eine Standardbreite 23 in der Querrichtung Y auf, welche breiter ist als eine Ausdehnung des mobilen Systems 10 in der Querrichtung Y.

Das mobile System 10 umfasst eine Sicherheitssteuerung 30. Die Sicherheitssteuerung 30 generiert eine Warnmeldung, wenn einer der Sensoren 1, 2 ein Hindernis in dem Standardschutzfeld 21 erkennt. Ein Hindernis ist beispielsweise ein anderes mobiles System 10, eine Person oder ein sonstiges Objekt 40, zu welchem ein Abstand einzuhalten ist. Es ist auch denkbar, dass die Sicherheitssteuerung 30 neben dem Generieren der Warnmeldung weitere Aktionen durchführt, beispielsweise das mobile System 10 abbremst und eine Weiterfahrt verhindert.

Das mobile System 10 umfasst eine Prädiktionseinheit 32 zur Prädiktion von vorgegebenen Konturen von Objekten 40. Die Prädiktionseinheit 32 weist eine Karte auf, welche Objekte 40 enthält, welche entlang eines vorgegebenen Fahrwegs des mobilen Systems 10 angeordnet sind. Das mobile System 10 umfasst auch einen Positionssensor zur Erfassung einer Position des mobilen Systems 10, beispielsweise innerhalb der technischen Anlage.

Das mobile System 10 umfasst eine Vergleichseinheit 34 zum Vergleich einer von der Prädiktionseinheit 32 prädizierten Kontur mit einer von einem der Sensoren 1, 2 erkannten Kontur. Wenn die Vergleichseinheit 34 eine Übereinstimmung einer von der Prädiktionseinheit 32 prädizierten Kontur mit einer von einem der Sensoren 1 innerhalb des Standardschutzfeldes 21 erkannten Kontur feststellt, so gibt die Vergleichseinheit 34 ein entsprechendes Signal an die Sicherheitssteuerung 30.

Die Übergabestation weist zwei Seitenwände auf, welche als Objekte 40 anzusehen sind. Die besagten Objekte 40 sind in der Querrichtung Y versetzt zueinander angeordnet. Ein Freiraum zwischen den Objekten 40 in Querrichtung Y ist breiter als eine Ausdehnung des mobilen Systems 10 in der Querrichtung Y, aber schmäler als die Standardbreite 23 des Standardschutzfeldes 21.

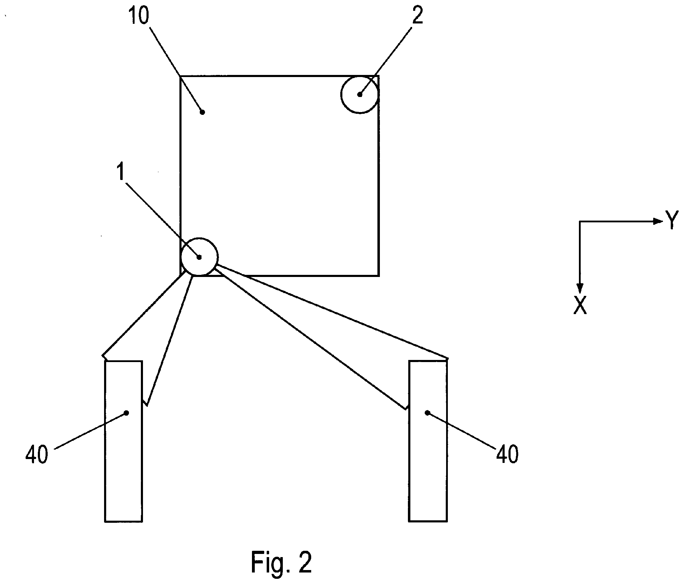

Figur 2 zeigt das mobile System aus Figur 1 bei der Erkennung von Konturen der Übergabestation. Die Prädiktionseinheit 34 prädiziert aufgrund der Position des mobilen Systems 10 und des vorgegebenen Fahrwegs anhand der Karte die Konturen der beiden Objekte 40, vorliegend also der Seitenwände der Übergabestation.

Der erste Sensor 1 erkennt die Konturen der beiden Objekte 40, vorliegend also der Seitenwände der Übergabestation, innerhalb des hier nicht dargestellten Standardschutzfeldes 21.

Die Vergleichseinheit 34 vergleicht die von der Prädiktionseinheit 32 prädizierten Konturen mit den von dem ersten Sensor 1 erkannten Konturen der Objekte 40. Dabei stellt die Vergleichseinheit 34 vorliegend eine Übereinstimmung der von der Prädiktionseinheit 32 prädizierten Konturen mit den von dem ersten Sensor 1 innerhalb des Standardschutzfeldes 21 erkannten Konturen fest und gibt ein entsprechendes Signal an die Sicherheitssteuerung 30. Die Sicherheitssteuerung 30 führt daraufhin eine Umschaltung von dem Standardmodus in einen Sondermodus durch.

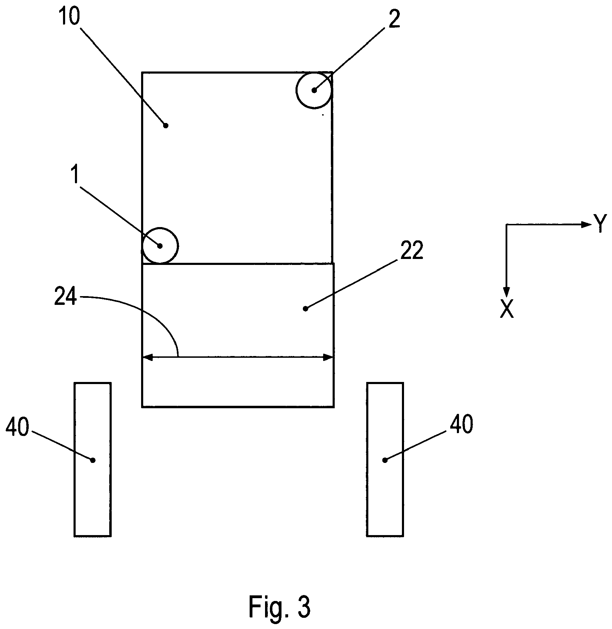

Figur 3 zeigt das mobile System 10 aus Figur 2 in dem Sondermodus vor der Übergabestation mit einem Sonderschutzfeld 22. Das Sonderschutzfeld 22 weist eine Sonderbreite 24 in der Querrichtung Y auf, welche kleiner ist als die Standardbreite 23 des Standardschutzfeldes 21. Vorliegend entspricht die Sonderbreite 24 annähernd einer Ausdehnung des mobilen Systems 10 in der Querrichtung Y. Der Freiraum zwischen den Objekten 40 in Querrichtung Y ist somit breiter die Sonderbreite 24 des Sonderschutzfeldes 22.

Die Sicherheitssteuerung 30 generiert eine Warnmeldung, wenn einer der Sensoren 1, 2 ein Hindernis in dem Sonderschutzfeld 22 erkennt. Vorliegend ist der Freiraum zwischen den Objekten 40 in Querrichtung Y jedoch breiter als die Sonderbreite 24 des Sonderschutzfeldes 22, und die Sensoren 1, 2 erkennen keines der Objekte 40 und kein weiteres Hindernis in dem Sonderschutzfeld 22. Daher generiert die Sicherheitssteuerung 30 beim Einfahren in die Übergabestation keine Warnmeldung.

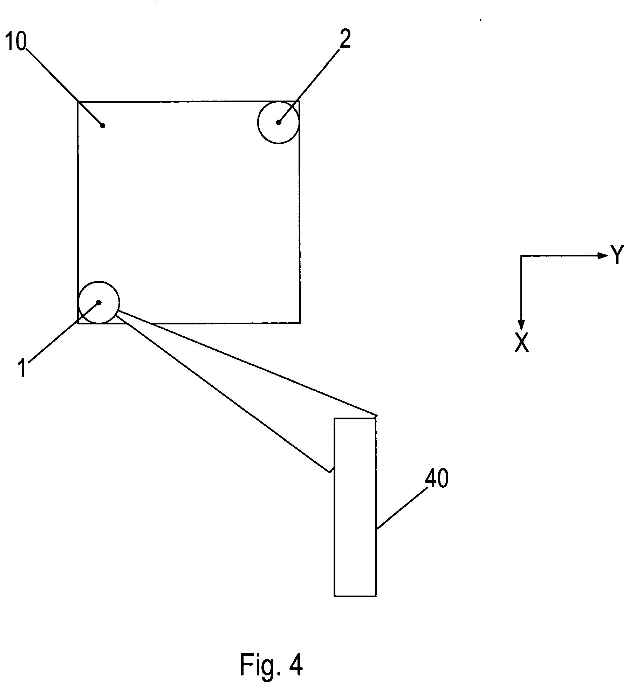

Figur 4 zeigt das mobile System 10 aus Figur 1 bei der Erkennung einer Kontur einer Wand, welche als Objekt 40 anzusehen ist. Der erste Sensor 1 erkennt die Kontur eines Objekts 40, vorliegend also der Wand, innerhalb des hier nicht dargestellten Standardschutzfeldes 21. Die Wand befindet sich dabei seitlich neben dem Fahrweg des mobilen System 10.

Die Prädiktionseinheit 34 prädiziert aufgrund der Position des mobilen Systems 10 und des vorgegebenen Fahrwegs anhand der Karte die Kontur des Objekts 40, vorliegend also der Wand.

Die Vergleichseinheit 34 vergleicht die von der Prädiktionseinheit 32 prädizierte Kontur mit der von dem ersten Sensor 1 erkannten Kontur des Objekts 40. Dabei stellt die Vergleichseinheit 34 vorliegend eine Übereinstimmung der von der Prädiktionseinheit 32 prädizierten Kontur mit der von dem ersten Sensor 1 innerhalb des Standardschutzfeldes 21 erkannten Kontur fest und gibt ein entsprechendes Signal an die Sicherheitssteuerung 30. Die Sicherheitssteuerung 30 führt daraufhin eine Umschaltung von dem Standardmodus in einen Sondermodus durch.

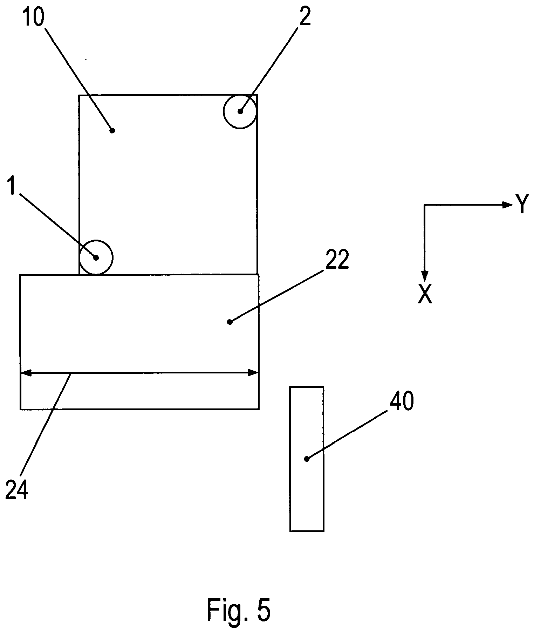

Figur 5 zeigt das mobile System 10 aus Figur 4 in dem Sondermodus vor der Wand mit einem Sonderschutzfeld 22. Das Sonderschutzfeld 22 weist eine Sonderbreite 24 in der Querrichtung Y auf, welche kleiner ist als die Standardbreite 23 des Standardschutzfeldes 21. Vorliegend ist die Sonderbreite 24 jedoch größer als die Ausdehnung des mobilen Systems 10 in der Querrichtung Y.

Die Sicherheitssteuerung 30 generiert eine Warnmeldung, wenn einer der Sensoren 1, 2 ein Hindernis in dem Sonderschutzfeld 22 erkennt. Vorliegend ist das Sonderschutzfeld 22 auf der dem Objekt 40 zugewandten Seite jedoch derart verkleinert, dass die Sensoren 1, 2 beim Vorbeifahren an dem Objekt 40 kein Objekt 40 und kein weiteres Hindernis in dem Sonderschutzfeld 22 erkennen. Daher generiert die Sicherheitssteuerung 30 beim Vorbeifahren an der Wand keine Warnmeldung.

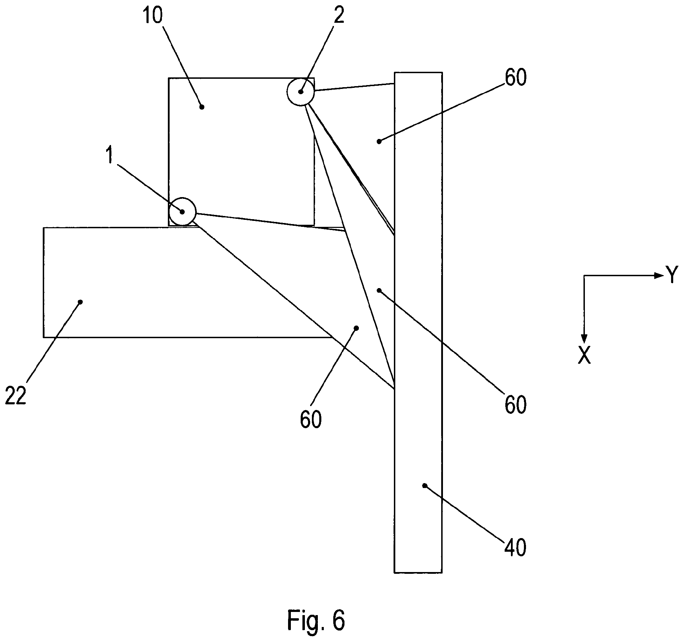

Figur 6 zeigt das mobile System 10 aus Figur 4 in dem Sondermodus neben der Wand, also neben dem Objekt 40. Das mobile System 10 fährt vorliegend in Fahrtrichtung X seitlich an dem Objekt 40 vorbei. Dabei befindet sich das Objekt 40, also die Wand, ständig außerhalb des Sonderschutzfeldes 22.

Die Sensoren 1, 2 erkennen dabei weitere Konturen des Objekts 40 in Sichtfeldern 60, welche sich über das Sonderschutzfeld 22 hinaus erstrecken. Insbesondere erkennen die Sensoren 1, 2 dabei eine Kontur, welche ausschließlich in Querrichtung Y zu dem mobilen System 10 versetzt ist, und eine weitere Kontur, welche in Querrichtung Y zu dem mobilen System 10 versetzt ist und sich in Fahrtrichtung X vor dem mobilen System 10 befindet.

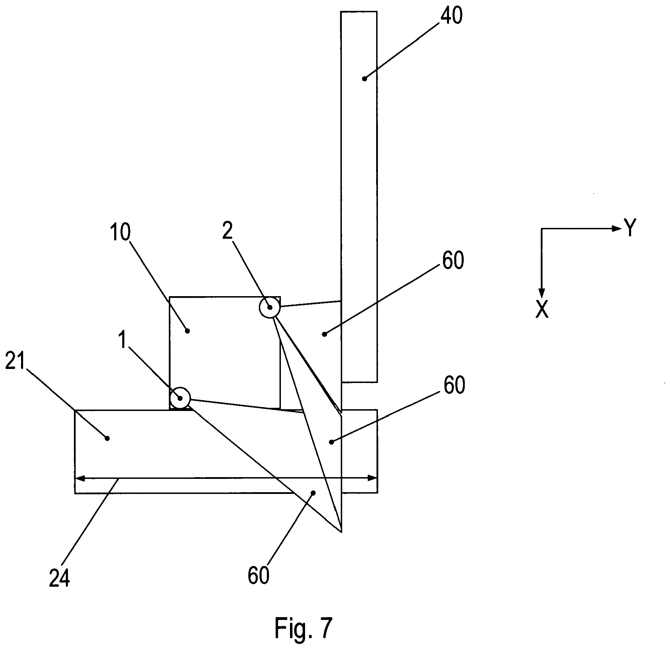

Figur 7 zeigt das mobile System 10 aus Figur 4 in dem Sondermodus am Ende der Wand, also am Ende des Objekts 40. Die Sensoren 1, 2 erkennen noch die Kontur, welche ausschließlich in Querrichtung Y zu dem mobilen System 10 versetzt ist. Die weitere Kontur, welche in Querrichtung Y zu dem mobilen System 10 versetzt ist und sich in Fahrtrichtung X vor dem mobilen System 10 befindet, wird von den Sensoren 1, 2 nicht mehr erkannt. Das mobile System 10 verlässt somit das Objekt 40.

Zu diesem Zeitpunkt, spätestens jedoch, wenn auch die ausschließlich in Querrichtung Y zu dem mobilen System 10 versetzte Kontur des Objekts 40 von den Sensoren 1, 2 nicht mehr erkannt wird, führt die Sicherheitssteuerung 30 eine Umschaltung von dem Sondermodus in den Standardmodus durch. Im Standardmodus ist wieder das Standardschutzfeld 21 mit der Standardbreite 23 aktiv.

Im Sondermodus wird das mobile System 10 mit einer definierten Sondergeschwindigkeit betrieben. Beim Verlassen des Objekts, mit dem Umschalten in den Standardmodus, wird die Geschwindigkeit zunächst verringert. Das mobile System 10 wird also, kurzzeitig, mit einer Geschwindigkeit betrieben, welche geringer als die Sondergeschwindigkeit ist.

In den Figuren 4 bis 7 ist gezeigt, wie das mobile System 10 entlang eines Objekts 40, vorliegend einer Wand, fährt, welches sich in Fahrtrichtung X gesehen links von dem mobilen System 10 befindet. Ebenso ist es denkbar, dass sich das Objekt 40 in Fahrtrichtung X gesehen rechts von dem mobilen System 10 befindet, sowie, dass sich in Fahrtrichtung X gesehen rechts und links von dem mobilen System 10 je ein Objekt befindet.

### Bezugszeichenliste

- 1: erster Sensor
- 2: zweiter Sensor
- 10: Mobiles System
- 21: Standardschutzfeld
- 22: Sonderschutzfeld
- 23: Standardbreite
- 24: Sonderbreite
- 30: Sicherheitssteuerung
- 32: Prädiktionseinheit
- 34: Vergleichseinheit
- 36: Steuereinheit
- 40: Objekt
- 60: Sichtfeld
- X: Fahrtrichtung
- Y: Querrichtung

## Patentansprüche

1. Mobiles System (10) zum Betrieb insbesondere in einer technischen Anlage, welches
mindestens einen Sensor (1, 2) zur Erkennung von Hindernissen sowie zur Erkennung von Konturen von Objekten (40) und
eine Sicherheitssteuerung (30), welche dazu eingerichtet ist, eine Warnmeldung zu generieren, wenn der mindestens eine Sensor (1, 2) ein Hindernis in einem definierten Schutzfeld (21, 22) erkennt, umfasst,
**dadurch gekennzeichnet, dass**
das mobile System (10) in einem Standardmodus mit einem Standardschutzfeld (21), welches eine Standardbreite (23) in einer Querrichtung (Y) aufweist, betreibbar ist, und dass
das mobile System (10) in einem Sondermodus mit einem Sonderschutzfeld (22), welches eine Sonderbreite (24) in der Querrichtung (Y) aufweist, betreibbar ist, wobei die Sonderbreite (24) kleiner ist als die Standardbreite (23), und dass
das mobile System (10) eine Prädiktionseinheit (32) zur Prädiktion einer vorgegebenen Kontur eines Objekts (40) und
eine Vergleichseinheit (34) zum Vergleich einer von der Prädiktionseinheit (32) prädizierten Kontur mit einer von dem mindestens einen Sensor (1, 2) erkannten Kontur umfasst, und dass
eine Umschaltung von dem Standardmodus zu dem Sondermodus vorgesehen ist, wenn die Vergleichseinheit (34) eine Übereinstimmung einer von der Prädiktionseinheit (32) prädizierten Kontur mit einer von dem mindestens einen Sensor (1, 2), insbesondere innerhalb des Standardschutzfeldes (21), erkannten Kontur feststellt, und dass
eine Umschaltung von dem Sondermodus zu dem Standardmodus vorgesehen ist, wenn die vorgegebene Kontur des Objekts von dem mindestens einen Sensor (1, 2) nicht mehr erkannt wird, und dass
das mobile System (10) in dem Sondermodus mit einer definierten Sondergeschwindigkeit betrieben wird, und dass
das mobile System (10) nach der Umschaltung von dem Sondermodus zu dem Standardmodus kurzzeitig mit einer Geschwindigkeit betrieben wird, welche geringer als die Sondergeschwindigkeit ist, und dass
das mobile System (10) vor der Umschaltung von dem Standardmodus zu dem Sondermodus mit einer Geschwindigkeit betrieben wird, welche höher als die Sondergeschwindigkeit ist.

2. Mobiles System (10) nach Anspruch 1, **dadurch gekennzeichnet, dass**
das mobile System (10) einen ersten Sensor (1) und einen zweiten Sensor (2) aufweist, welche an gegenüberliegenden Seiten des mobilen Systems (10) angeordnet sind.

3. Mobiles System (10) nach einem der vorangegangenen Ansprüche,
**dadurch gekennzeichnet, dass**
der mindestens eine Sensor (1, 2) als Laserscanner ausgebildet ist.

4. Mobiles System (10) nach einem der vorangegangenen Ansprüche,
**dadurch gekennzeichnet, dass**
das mobile System (10) als autonom fahrendes Fahrzeug ausgebildet ist, welches eine Antriebseinrichtung, einen elektrischen Energiespeicher zur Versorgung der Antriebseinrichtung sowie eine Steuereinheit (36) zur Steuerung der Antriebseinrichtung aufweist.

5. Mobiles System (10) nach einem der vorangegangenen Ansprüche,
**dadurch gekennzeichnet, dass**
die Prädiktionseinheit (32) eine Karte aufweist, welche Objekte (40) enthält, welche entlang eines vorgegebenen Fahrwegs des mobilen Systems (10) angeordnet sind.

6. Mobiles System (10) nach einem der vorangegangenen Ansprüche,
**dadurch gekennzeichnet, dass**
das mobile System (10) einen Positionssensor zur Erfassung einer Position des mobilen Systems (10) insbesondere innerhalb der technischen Anlage umfasst.

7. Verfahren zum Betreiben eines mobilen Systems (10) nach einem der vorangegangenen Ansprüche, insbesondere in einer technischen Anlage,
**dadurch gekennzeichnet, dass**
von der Prädiktionseinheit (32) eine vorgegebene Kontur eines Objekts (40) prädiziert wird, und von der Vergleichseinheit (34) ein Vergleich der von der Prädiktionseinheit (32) prädizierten Kontur mit einer von dem mindestens einen Sensor (1, 2), insbesondere innerhalb des Standardschutzfeldes (21), erkannten Kontur durchgeführt wird, und dass
eine Umschaltung von dem Standardmodus zu dem Sondermodus durchgeführt wird, wenn von der Vergleichseinheit (34) eine Übereinstimmung einer von der Prädiktionseinheit (32) prädizierten Kontur mit einer von dem mindestens einen Sensor (1, 2), insbesondere innerhalb des Standardschutzfeldes (21), erkannten Kontur festgestellt wird, und dass
eine Umschaltung von dem Sondermodus zu dem Standardmodus durchgeführt wird, wenn die vorgegebene Kontur des Objekts (40) von dem mindestens einen Sensor (1, 2) nicht mehr erkannt wird, und dass
das mobile System (10) im Sondermodus mit einer definierten Sondergeschwindigkeit betrieben wird, und dass
das mobile System (10) nach der Umschaltung von dem Sondermodus zu dem Standardmodus kurzzeitig mit einer Geschwindigkeit betrieben wird, welche geringer als die Sondergeschwindigkeit ist, und dass
das mobile System (10) vor der Umschaltung von dem Standardmodus zu dem Sondermodus mit einer Geschwindigkeit betrieben wird, welche höher als die Sondergeschwindigkeit ist.

8. Verfahren nach Anspruch 7, **dadurch gekennzeichnet, dass**
von der Prädiktionseinheit (32) die Kontur eines Objekts (40) prädiziert wird, welches auf einer Karte der Prädiktionseinheit (32) entlang eines vorgegebenen Fahrwegs des mobilen Systems (10) angeordnet ist.

9. Verfahren nach einem der Ansprüche 7 bis 8, **dadurch gekennzeichnet, dass**
die Umschaltung von dem Standardmodus zu dem Sondermodus nur dann durchgeführt wird, wenn
von der Vergleichseinheit (34) eine Übereinstimmung der von der Prädiktionseinheit (32) prädizierten Kontur mit der von dem mindestens einen Sensor (1, 2) innerhalb des Standardschutzfeldes (21) erkannten Kontur in einer definierten Zeitspanne festgestellt wird.

10. Verfahren nach einem der Ansprüche 7 bis 9, **dadurch gekennzeichnet, dass**
die Umschaltung von dem Standardmodus zu dem Sondermodus nur dann durchgeführt wird, wenn
von der Vergleichseinheit (34) eine Übereinstimmung der von der Prädiktionseinheit (32) prädizierten Kontur mit der von dem mindestens einen Sensor (1, 2) innerhalb des Standardschutzfeldes (21) erkannten Kontur während eines definierten Fahrwegs des mobilen Systems (10) festgestellt wird.

## Claims

1. Mobile system (10) for operation in particular in a technical facility, comprising at least one sensor (1, 2) for detecting obstacles and for detecting outlines of objects (40), and
a safety-related control system (30) configured to generate a warning message if the at least one sensor (1, 2) detects an obstacle in a defined protective zone (21, 22),
**characterised in that**
the mobile system (10) can be operated in a standard mode having a standard protective zone (21) that has a standard width (23) in a transverse direction (Y), and **in that** the mobile system (10) can be operated in a special mode having a special protective zone (22) that has a special width (24) in the transverse direction (Y),
the special width (24) being less than the standard width (23), and **in that** the mobile system (10) comprises a prediction unit (32) for predicting a predetermined outline of an object (40), and
a comparison unit (34) for comparing an outline predicted by the prediction unit (32) with an outline detected by the at least one sensor (1, 2), and **in that**
switching from the standard mode to the special mode is provided for when the comparison unit (34) establishes that an outline predicted by the prediction unit (32) matches an outline detected by the at least one sensor (1, 2), in particular within the standard protective zone (21), and **in that**
switching from the special mode to the standard mode is provided for when the predetermined outline of the object is no longer detected by the at least one sensor (1, 2), and **in that**
the mobile system (10) is operated in the special mode at a defined special speed, and **in that**
after the mode is switched from the special mode to the standard mode, the mobile system (10) is briefly operated at a speed that is less than the special speed, and **in that**
before the mode is switched from the special mode to the standard mode, the mobile system (10) is operated at a speed that is greater than the special speed.

2. Mobile system (10) according to claim 1,
**characterised in that**
the mobile system (10) comprises a first sensor (1) and a second sensor (2) which are arranged on opposite sides of the mobile system (10).

3. Mobile system (10) according to any of the preceding claims,
**characterised in that**
the at least one sensor (1, 2) is configured as a laser scanner.

4. Mobile system (10) according to any of the preceding claims,
**characterised in that**
the mobile system (10) is configured as a self-driving vehicle comprising a drive apparatus, an electrical energy storage device for powering the drive apparatus and a control unit (36) for controlling the drive apparatus.

5. Mobile system (10) according to any of the preceding claims,
**characterised in that**
the prediction unit (32) comprises a map containing objects (40) that are arranged along a predetermined route of the mobile system (10).

6. Mobile system (10) according to any of the preceding claims,
**characterised in that**
the mobile system (10) comprises a position sensor for sensing a position of the mobile system (10), in particular within the technical facility.

7. Method for operating a mobile system (10) according to any of the preceding claims, in particular in a technical facility,
**characterised in that**
the prediction unit (32) predicts a predetermined outline of an object (40), and the comparison unit (34) compares the outline predicted by the prediction unit (32) with an outline detected by the at least one sensor (1, 2), in particular within the standard protective zone (21), and **in that**
the mode is switched from the standard mode to the special mode when the comparison unit (34) establishes that an outline predicted by the prediction unit (32) matches an outline detected by the at least one sensor (1, 2), in particular within the standard protective zone (21), and **in that**
the mode is switched from the special mode to the standard mode when the predetermined outline of the object (40) is no longer detected by the at least one sensor (1, 2), and **in that** the mobile system (10) is operated in the special mode at a defined special speed, and **in that**
after the mode is switched from the special mode to the standard mode, the mobile system (10) is briefly operated at a speed that is less than the special speed, and **in that** before the mode is switched from the special mode to the standard mode, the mobile system (10) is operated at a speed that is greater than the special speed.

8. Method according to claim 7,
**characterised in that**
the prediction unit (32) predicts the outline of an object (40) that is arranged along a predetermined route of the mobile system (10) in a map of the prediction unit (32).

9. Method according to any of claims 7 to 8,
**characterised in that**
the mode is switched from the standard mode to the special mode only when the comparison unit (34) establishes, within a defined time period, that an outline predicted by the prediction unit (32) matches the outline detected by the at least one sensor (1, 2) within the standard protective zone (21).

10. Method according to any of claims 7 to 9,
**characterised in that**
the mode is switched from the standard mode to the special mode only when the comparison unit (34) establishes, over a defined route of the mobile system (10), that an outline predicted by the prediction unit (32) matches the outline detected by the at least one sensor (1, 2) within the standard protective zone (21).

## Revendications

1. Système mobile (10) pour un fonctionnement en particulier dans une installation technique, qui comprend
au moins un capteur (1, 2) permettant de détecter des obstacles et de détecter des contours d'objets (40) et
une commande de sécurité (30) conçue pour générer un message d'avertissement lorsque le au moins un capteur (1, 2) détecte un obstacle dans un champ de protection défini (21, 22),
**caractérisé en ce que**
le système mobile (10) peut fonctionner en un mode standard avec un champ de protection standard (21) présentant une largeur standard (23) dans une direction transversale (Y), et **en ce que**
le système mobile (10) peut fonctionner en un mode spécial avec un champ de protection spécial (22) présentant une largeur spéciale (24) dans la direction transversale (Y),
la largeur spéciale (24) étant inférieure à la largeur standard (23), et **en ce que** le système mobile (10) comprend une unité de prédiction (32) permettant de prédire un contour prédéfini d'un objet (40) et
une unité de comparaison (34) permettant de comparer un contour prédit par l'unité de prédiction (32) avec un contour détecté par le au moins un capteur (1, 2), et **en ce que** une commutation du mode standard vers le mode spécial est prévue lorsque l'unité de comparaison (34) constate une correspondance entre un contour prédit par l'unité de prédiction (32) et un contour détecté par le au moins un capteur (1, 2), en particulier à l'intérieur du champ de protection standard (21), et **en ce que**
une commutation du mode spécial vers le mode standard est prévue lorsque le contour prédéfini de l'objet n'est plus détecté par le au moins un capteur (1, 2) et **en ce que** le système mobile (10) fonctionne dans le mode spécial à une vitesse spéciale définie, et **en ce que**
après la commutation du mode spécial vers le mode standard, le système mobile (10) fonctionne brièvement à une vitesse inférieure à la vitesse spéciale, et **en ce que**
avant la commutation du mode standard vers le mode spécial, le système mobile (10) fonctionne à une vitesse supérieure à la vitesse spéciale.

2. Système mobile (10) selon la revendication 1, **caractérisé en ce que**
le système mobile (10) présente un premier capteur (1) et un second capteur (2) qui sont agencés sur des côtés opposés du système mobile (10).

3. Système mobile (10) selon l'une quelconque des revendications précédentes, **caractérisé en ce que**
au moins un capteur (1, 2) est réalisé sous la forme d'un scanner laser.

4. Système mobile (10) selon l'une quelconque des revendications précédentes, **caractérisé en ce que**
le système mobile (10) est réalisé sous la forme d'un véhicule autonome qui présente un dispositif d'entraînement, un accumulateur d'énergie électrique permettant d'alimenter le dispositif d'entraînement, et une unité de commande (36) permettant de commander le dispositif d'entraînement.

5. Système mobile (10) selon l'une quelconque des revendications précédentes, **caractérisé en ce que**
l'unité de prédiction (32) présente une carte contenant des objets (40) qui sont agencés le long d'un trajet prédéfini du système mobile (10).

6. Système mobile (10) selon l'une quelconque des revendications précédentes, **caractérisé en ce que**
le système mobile (10) comprend un capteur de position permettant de détecter une position du système mobile (10), en particulier à l'intérieur de l'installation technique.

7. Procédé de fonctionnement d'un système mobile (10) selon l'une quelconque des revendications précédentes, en particulier dans une installation technique,
**caractérisé en ce que**
un contour prédédéfini d'un objet (40) est prédit par l'unité de prédiction (32), et une comparaison entre le contour prédit par l'unité de prédiction (32) et un contour détecté par le au moins un capteur (1, 2), en particulier à l'intérieur du champ de protection standard (21), est mise en oeuvre par l'unité de comparaison (34), et **en ce que**
une commutation du mode standard vers le mode spécial est mise en oeuvre lorsqu'une correspondance entre un contour prédit par l'unité de prédiction (32) et un contour détecté par le au moins un capteur (1, 2), en particulier à l'intérieur du champ de protection standard (21), est constatée par l'unité de comparaison (34), et **en ce que**
une commutation du mode spécial vers le mode standard est mise en oeuvre lorsque le contour prédéfini de l'objet n'est plus détecté par le au moins un capteur (1, 2) et **en ce que**
le système mobile (10) fonctionne dans le mode spécial à une vitesse spéciale définie, et **en ce que**
après la commutation du mode spécial vers le mode standard, le système mobile (10) fonctionne brièvement à une vitesse inférieure à la vitesse spéciale, et **en ce que**
avant la commutation du mode standard vers le mode spécial, le système mobile (10) fonctionne à une vitesse supérieure à la vitesse spéciale.

8. Procédé selon la revendication 7, **caractérisé en ce que**
l'unité de prédiction (32) prédit le contour d'un objet (40) qui est agencé sur une carte de l'unité de prédiction (32) le long d'une trajectoire prédéfinie du système mobile (10).

9. Procédé selon l'une quelconque des revendications 7 à 8, **caractérisé en ce que** la commutation du mode standard vers le mode spécial n'est mise en oeuvre que si une correspondance entre le contour prédit par l'unité de prédiction (32) et le contour détecté par le au moins un capteur (1, 2) à l'intérieur du champ de protection standard (21) est constatée par l'unité de comparaison (34) pendant une période de temps définie.

10. Procédé selon l'une quelconque des revendications 7 à 9, **caractérisé en ce que** la commutation du mode standard vers le mode spécial n'est mise en oeuvre que si une correspondance entre le contour prédit par l'unité de prédiction (32) et le contour détecté par le au moins un capteur (1, 2) à l'intérieur du champ de protection standard (21) est constatée par l'unité de comparaison (34) pendant un trajet défini du système mobile (10).
